Europäisches Patentamt

European Patent Office

Office européen des brevets

(11) Veröffentlichungsnummer: **0 207 348**

**A1**

## EUROPÄISCHE PATENTANMELDUNG

(21) Anmeldenummer: 86108131.3

(22) Anmeldetag: 13.06.86

(51) Int. Cl.⁴: **H 04 B 3/36**
**H 04 B 1/58**

(30) Priorität: 13.06.85 DE 3521263

(43) Veröffentlichungstag der Anmeldung:
07.01.87 Patentblatt 87/2

(84) Benannte Vertragsstaaten:
AT BE CH DE FR GB IT LI NL SE

(71) Anmelder: Siemens Aktiengesellschaft Berlin und
München
Wittelsbacherplatz 2
D-8000 München 2(DE)

(72) Erfinder: Reiter, Georg, Ing. grad.
Risseckstrasse 6
D-8126 Schliersee(DE)

(54) Zweidrahtverstärker, Zweidraht-Vierdrahtverstärker oder Vierdrahtkreis mit Verstärkung.

(57) Zweidrahtverstärker, Zweidraht-Vierdrahtverstärker und Vierdrahtkreise mit Verstärkung, die mit Gabeln (2,12) realisierte Zweidraht-Vierdrahtübergänge enthalten, weisen durch die Gabeln (2,12) zwangsläufig "natürliche" Rückkopplungspfade zwischen den Vierdrahtwegen auf. Zur Minderung einer Pfeifneigung dient ein künstlicher Rückkopplungspfad. Die Realisierung des künstlichen Rückkopplungspfades (4,5;9,10) mit einem analogen adaptiven Transversalfilter (5,9) ermöglicht es, daß das Signal in gleicher Weise beeinflußt wird wie auf dem "natürlichen" Rückkopplungspfad. Das so erhaltene Signal wird nun in einer Subtrahierschaltung (4,10) vom Signal der Gegenrichtung, das auch die störenden "natürlichen" Rückkopplungssignale enthält, abgezogen. Dabei werden auch Laufzeiten erfaßt, die infolge von Reflexionen an beliebiger Stelle längs der Zweidrahtleitung (1,14) oder an deren von der Gabel (2,12) angewandtem Ende entstehen. Die Pfeifneigung wird vollständig beseitigt.

FIG 1

Siemens Aktiengesellschaft
Berlin und München

Unser Zeichen
VPA 85 P 1359 E

**Zweidrahtverstärker, Zweidraht-Vierdrahtverstärker oder Vierdrahtkreis mit Verstärkung**

Die Erfindung bezieht sich auf einen Zweidrahtverstärker, Zweidraht-Vierdrahtverstärker oder Vierdrahtkreis mit Verstärkung zur Verstärkung analoger Signale mit ein oder zwei symmetrischen Gabeln mit Nachbildung, mit wenigstens einem Verstärker in jedem Vierdrahtweg, mit einem ersten, sich durch die Schaltung ergebenden (natürlichen) Rückkopplungspfad in jedem Zweidraht-Vierdrahtübergang und mit einem zweiten künstlichen Rückkopplungspfad, dessen Eingang mit dem Vierdrahtweg einer Übertragungsrichtung und dessen Ausgang mit dem Vierdrahtweg der anderen Übertragungsrichtung verbunden ist, in wenigstens einem Zweidraht-Vierdrahtübergang.

Zweidrahtverstärker enthalten für jede Übertragungsrichtung einen Verstärker, wobei jeweils der Eingang des einen mit dem Ausgang des anderen über eine Gabelschaltung zum einen miteinander und zum anderen mit der weiterführenden Zweidrahtleitung verbunden sind. Bei einem Zweidraht-Vierdrahtverstärker entfällt eine Gabelschaltung. Derartige Anordnungen sind aus dem Buch "Niederfrequenz-Übertragungstechnik", Günther Rahmig, Verlag Berliner Union GmbH Stuttgart, Verlag W. Kohlhammer GmbH Stuttgart Berlin Köln Mainz, 1972, Seiten 143 bis 148 bekannt.

Wke 1 Buh / 23.04.86

Beim Vierdrahtkreis mit Verstärkung ist der Vierdrahtkreis nicht wie beim Zweidrahtverstärker konzentriert, sondern kann in jedem Vierdrahtweg mehrere Verstärker enthalten. Eine solche Anordnung ist in den "Unterrichtsblättern der Deutschen Bundespost", 34 (1981) 5, Seiten 186-200 beschrieben.

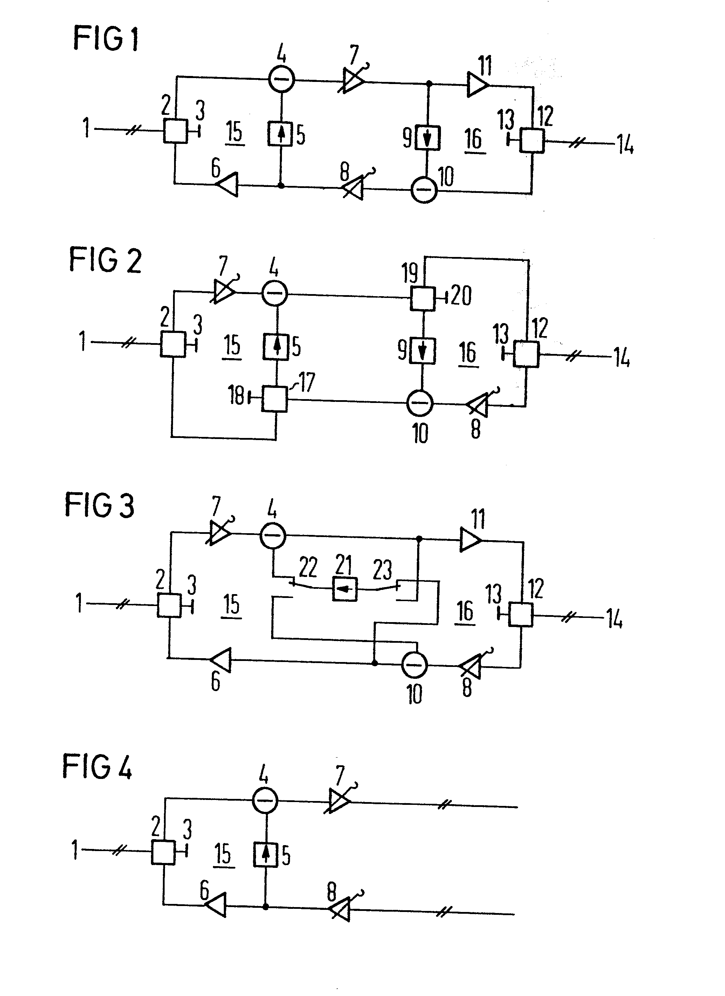

Aus der DE-OS 26 53 965 ist eine Echounterdrückungsanord- nung für eine Digitaldaten-Übertragungsanlage bekannt. In der Anordnung nach Figur 1 liegt ein Echokompensator unmittelbar an einer Gabel an. Hier gilt es, ein schwaches Signal, das von einer entfernten Gegenstelle kommt, zu regenerieren. Dabei stört das kräftige Signal der Sendestelle, die am gleichen Ort wie der Regenerator angeordnet ist. Der Echokompensator beseitigt dieses Signal, so daß der Regenerator richtig entscheiden kann.

In "The Bell System Technical Journal", 59 (Februar 85) 2, Seiten 149-159 ist ein Echokompensator beschrieben, der in einem Auslandskopfamt angeordnet und mit mehreren Gabelschaltungen verbunden ist. Im Gegensatz zum System nach der genannten DE-OS 26 53 965 soll ein für das Ohr wahrnehmbares Echo beseitigt werden. Auf der Strecke kann, inbesondere bei Satellitenübertragung, eine Verzögerungszeit bis zu 500 ms auftreten. Zwischen dem Echokompensator und der zugehörigen Gabel und zurück kann außerdem noch eine Laufzeit von 40 ms liegen. Bereits Echolaufzeiten ab 50 ms stören. Zeiten von bis zu 500 ms und mehr entstehen im internationalen Verkehr, während im Bereich der Deutschen Bundespost noch kein wahrnehmbares Echo entsteht.

In Figur 4 dieser Literaturstelle ist ein Transversalfilter gezeigt. Dieses arbeitet analog; wird ein Analog-Digitalumsetzer vorgeschaltet, dann arbeitet die Struktur digital. Bei einer Laufzeit von 40 ms sind 320 Abgriffe nötig.

Aus der DE OS 28 46 105, Figur 10, ist weiter ein digitaler Umsetzer bekannt, der an die Stelle eines Transversalfilters treten kann. Diese digitale Umsetzung wird in der Fachwelt als "memory compensation" bezeichnet. Die Nachbildungen an den Gabeln sind Netzwerke, die es ermöglichen, den Wellenwiderstand der an der Zweidrahtklemme der Gabel angeschlossenen Leitung nach Betrag und Phase im gesamten Übertragungsbereich nachzubilden. Je besser die erreichte Nachbildgüte ist, desto größer wird die Übergangsdämpfung der Gabel und damit auch die erzielbare Verstärkung.

Für die Stabilität gilt bei einem Vierdrahtkreis die Forderung, daß die Summe der Dämpfungen größer sein muß wie die Summe der Verstärkungen.

Der Abgleich der Netzwerke ist zeitraubend und erfordert komplizierte Meßgeräte. In manchen Fällen läßt er sich trotzdem nur unbefriedigend durchführen, beispielsweise wenn die angeschlossene Leitung Stoßstellen aufweist oder wenn der Scheinwiderstand abhängig vom Verbindungsaufbau wechselt. In solchen Fällen muß man sich mit einer sogenannten Mittelwertnachbildung begnügen.

Durch Bespulung von Leiterpaaren läßt sich deren Dämpfung reduzieren. Allerdings wird dies durch eine Einengung des Übertragungsbandes von oben her erkauft. Gleichzeitig ändert sich ab der Bandbegrenzung der Wellenwiderstand der Leitung in so starkem Maße, daß sich mit den gebräuchlichen Nachbildungsnetzwerken keine ausreichende Nachbildgüte erzielen läßt. Damit die Schaltung dennoch nicht instabil wird, setzt man zu jedem Verstärker einen Tiefpaß mit Sperrwirkung für den nicht nachbildbaren Bereich.

Aus der DE-OS 27 53 361 ist schließlich noch eine Gabelschaltung zur Verbindung einer Zweidraht- und einer Vierdrahtleitung bekannt, die einen künstlichen Rückkopplungspfad mit einem den Frequenz- und Phasengang des Zweidrahtanschlusses nachbildenden Netzwerk.

Eine Nachbildung kann den Widerstand der angeschlossenen Zweidrahtleitung nachbilden. Sie kann aber nicht Reflexionen beseitigen oder kompensieren, die in der oder am fernen Ende der angeschlossenen Zweidrahtleitung entstehen. Dies kann auch nicht mit dem künstlichen Rückkopplungspfad nach der DE-OS 27 53 361 bewirkt werden.

Aufgabe der Erfindung ist es, die Pfeifneigung von Zweidrahtverstärkern, Zweidraht-Vierdrahtverstärkern und Vierdrahtkreisen mit Verstärkung zu beseitigen, die auf Laufzeiten infolge von Reflexionen an beliebiger Stelle längs der Zweidrahtleitung oder an deren von der Gabel abgewandten Ende entstehen.

Ausgehend von Anordnungen der einleitend geschilderten Art wird diese Aufgabe erfindungsgemäß dadurch gelöst, daß als zweiter Rückkopplungspfad eine Reihenschaltung aus einem eingangsseitig angeordneten analogen adaptiven Transversalfilter und aus einer ausgangsseitig in den Vierdrahtweg der anderen Übertragungsrichtung eingeschleiften Subtrahierschaltung vorgesehen ist.

- 5 -    VPA 85 P 1359 E

Dabei ist es vorteilhaft, wenn in der Übertragungsrichtung, an der der Eingang des zweiten Rückkopplungspfades hängt, eine Trennschaltung vorgesehen ist, die die Signale des Vierdrahtweges der anderen Übertragungsrichtung vom Eingang des zweiten Rückkopplungspfades fernhält.

Als Trennschaltung kann vorteilhafterweise entweder ein Trennverstärker oder eine der Ankopplung des zweiten Rückkopplungspfades dienende unsymmetrische Gabel großer Rückwärtsdämpfung vorgesehen sein.

Für die praktische Ausführung des zweiten Rückkopplungspfades sind mehrere Varianten möglich:

Vorteilhaft ist es, wenn als zweiter Rückkopplungspfad eine Reihenschaltung aus einem eingangsseitig angeordneten ersten Analog-Digitalumsetzer, aus einem digitalen adaptiven Transversalfilter, aus einem ersten Digital-Analogumsetzer und aus einer ausgangsseitig in den Vierdrahtweg abgehender Übertragungsrichtung eingeschleiften Subtrahierschaltung vorgesehen ist.

Vorteilhaft ist es auch, wenn als zweiter Rückkopplungspfad eine Reihenschaltung aus einem ersten Analog-Digitalumsetzer, aus einem digitalen adaptiven Transversalfilter und aus einer ausgangsseitig in den Vierdrahtweg der anderen Übertragungsrichtung eingeschleiften Subtrahierschaltung vorgesehen ist, der in diesem Vierdrahtweg ein zweiter Analog-Digitalumsetzer vor- und ein zweiter Digital-Analogumsetzer nachgeschaltet ist.

Vorteilhaft ist es schließlich, wenn als zweiter Rückkopplungspfad im Vierdrahtweg der einen Übertragungsrichtung ein dritter Analog-Digitalumsetzer und ein dritter Digital-Analogumsetzer eingeschleift sind, wenn ein digitales adaptives Transversalfilter vorgesehen ist, dessen Eingang mit dem Verbindungspunkt beider Umsetzer verbunden ist, und wenn in dem Vierdrahtweg der anderen Übertragungsrichtung eine Subtrahierschaltung eingeschleift ist, deren erster Eingang mit dem Ausgang des Transversalfilters verbunden ist und deren zweiter Eingang und deren Ausgang in den Vierdrahtweg der anderen Übertragungsrichtung eingeschleift sind und der ein zweiter Analog-Digitalumsetzer vor- und ein zweiter Digital-Analogumsetzer nachgeschaltet ist.

Die letzte Variante ist besonders für Vierdrahtkreise vorteilhaft, wenn eine genormte Digital-Schnittstelle vorgesehen ist, die zu digitalen Übertragungssystemen führt.

Der künstliche Rückkopplungspfad kann in einem derartigen Vierdrahtkreis auch ein Zeitmultiplexsignal mit beispielsweise dreißig Kanälen bedienen.

Im künstlichen Rückkopplungspfad kann an Stelle eines Transversalfilters auch ein digitaler Umsetzer treten, der eine "memory compensation" bewirkt.

Bei einem Zweidrahtverstärker mit einem zweiten Rückkopplungspfad an jedem Zweidraht-Vierdrahtübergang kann ein Transversalfilter oder ein digitaler Umsetzer im Zeitmultiplex in beide zweite Rückkopplungspfade eingeschaltet werden.

Der künstliche Rückkopplungspfad ist bei einer Anwendung im Niederfrequenzbereich vorteilhaft.

Anhand von Ausführungsbeispielen wird die Erfindung nachstehend näher erläutert.

Figur 1 zeigt ein erstes Ausführungsbeispiel eines erfindungsgemäßen Zweidrahtverstärkers mit einem analogen Transversalfilter,

Figur 2 zeigt ein zweites Ausführungsbeispiel eines erfindungsgemäßen Zweidrahtverstärkers mit einem analogen Transversalfilter,

Figur 3 zeigt ein drittes Ausführungsbeispiel eines erfindungsgemäßen Zweidrahtverstärkers mit einem analogen Transversalfilter,

Figur 4 zeigt einen erfindungsgemäßen Zweidraht-Vierdrahtverstärker mit analogem Transversalfilter,

Figur 5 zeigt ein Ausführungsbeispiel eines erfindungsgemäßen Vierdrahtkreises mit analogen Transversalfiltern,

Figur 6 zeigt ein erstes Ausführungsbeispiel eines erfindungsgemäßen Zweidraht-Vierdrahtübergangs mit einem digitalen Transversalfilter oder einem digitalen Umsetzer,

Figur 7 zeigt ein zweites Ausführungsbeispiel eines erfindungsgemäßen Zweidraht-Vierdrahtübergangs mit einem digitalen Transversalfilter oder einem digitalen Umsetzer,

Figur 8 zeigt ein drittes Ausführungsbeispiel eines erfindungsgemäßen Zweidraht-Vierdrahtübergangs mit einem digitalen Transversalfilter oder einem digitalen Umsetzer und

Figur 9 zeigt einen Teil eines erfindungsgemäßen Vierdrahtkreises mit einem digitalen Transversalfilter oder einem digitalen Umsetzer und mit einem PCM-System.

Figur 1 zeigt einen erfindungsgemäßen Zweidrahtverstärker zwischen Zweidrahtleitungen 1 und 14. Der Zweidrahtverstärker enthält Gabeln 2 und 12, Nachbildungen 3 und 13, Subtrahierschaltungen 4 und 10, analoge adaptive Transversalfilter 5 und 9, Trennverstärker 6 und 11 sowie Leitungsverstärker 7 und 8. Die Elemente 2 bis 6 werden zu einem Zweidraht-Vierdrahtübergang 15 und die Elemente 9 bis 13 zu einem weiteren Zweidraht-Vierdrahtübergang 16 zusammengefaßt.

Auf der Zweidrahtleitung 1 ankommende Signale gelangen über einen ersten Vierdrahtweg zur Zweidrahtleitung 14. Dieser erste Vierdrahtweg wird durch die Gabel 2, die Subtrahierschaltung 4, den Leitungsverstärker 7, den Trennverstärker 11 und die Gabel 12 gebildet. Auf der Zweidrahtleitung 14 ankommende Signale gelangen über einen zweiten Vierdrahtweg zur Zweidrahtleitung 1. Der zweite Vierdrahtweg wird durch die Gabel 12, die Subtrahierschaltung 10, den Leitungsverstärker 8, den Trennverstärker 6 und die Gabel 2 gebildet.

Im Zweidraht-Vierdrahtübergang 15 besteht ein natürlicher Rückkopplungspfad, der vom zweiten Vierdrahtweg zum ersten Vierdrahtweg führt. Beim Zweidraht-Vierdrahtübergang 16 besteht ebenso ein natürlicher Rückkopplungspfad, der vom ersten Vierdrahtweg über die Gabel 12 zum zweiten Vierdrahtweg führt. Die analogen adaptiven Transversalfilter 5 bzw. 16 bilden mit den Subtrahierschaltungen 4 bzw. 10 einen künstlichen Rückkopplungspfad, in dem das Nutzsignal die gleiche Beeinflussung erleidet wie auf dem natürlichen Rückkopplungspfad. Das so erhaltene Signal wird durch die Subtrahierschaltung 4 bzw. 10 vom Signal der Gegenrichtung, das auch die störenden, zur Instabilität führenden natürlichen Rückkopplungssignale enthält, abgezogen.

Dies gilt auch für Signale, die oberhalb der Grenzfrequenz bespulter Kabel auftreten. Der üblicherweise das Nutzband begrenzende Tiefpaß wird damit überflüssig.

Wenn man den Übertragungsbereich des künstlichen Rückkopplungspfades über das Nutzband bis zur Übertragungsgrenze des Verstärkers ausdehnt, so läßt sich aus Gesichtspunkten der Stabilität auch das Filter einsparen, das den Übertragungsbereich des Verstärkers auf die Nutzbandbreite begrenzt.

Wichtig für die einwandfreie Funktion der Schaltung ist, daß auf den Eingang des künstlichen Rückkopplungspfades keine Signale der anderen Übertragungsrichtung gelangen.

Durch die Trennverstärker 6 bzw. 11 oder eine Ankopplung des künstlichen Rückkopplungspfades mit Hilfe einer unsymmetrischen Gabelschaltung mit großer Rückwärtsdämpfung läßt sich dieses verhindern.

Figur 2 zeigt eine zweite Variante des erfindungsgemäßen Zweidrahtverstärkers mit analogen Transversalfiltern. Die Trennverstärker 6 und 11 sind hier durch unsymmetrische Gabeln 17 und 19 mit Nachbildungen 18 und 20 ersetzt. Die Leitungsverstärker 7 und 8 sind innerhalb der Zweidraht-Vierdrahtübergänge 15 und 16 angeordnet. Die künstlichen Rückkopplungspfade sind jetzt mit gegensinniger Übertragungsrichtung parallelgeschaltet.

Figur 3 zeigt ein weiteres Ausführungsbeispiel des erfindungsgemäßen Zweidrahtverstärkers mit nur einem analogen Transversalfilter 21, das mittels der Schalter 22 und 23 im Zeitmultiplex alternierend in beide künstliche Rückkopplungspfade eingeschaltet wird.

- 10 -     VPA 85 P 1359 E

Figur 4 zeigt einen erfindungsgemäßen Zweidraht-Vierdrahtverstärker, der sich vom Zweidrahtverstärker nach
Figur 1 lediglich dadurch unterscheidet, daß der Zweidraht-Vierdrahtübergang 16 entfällt.

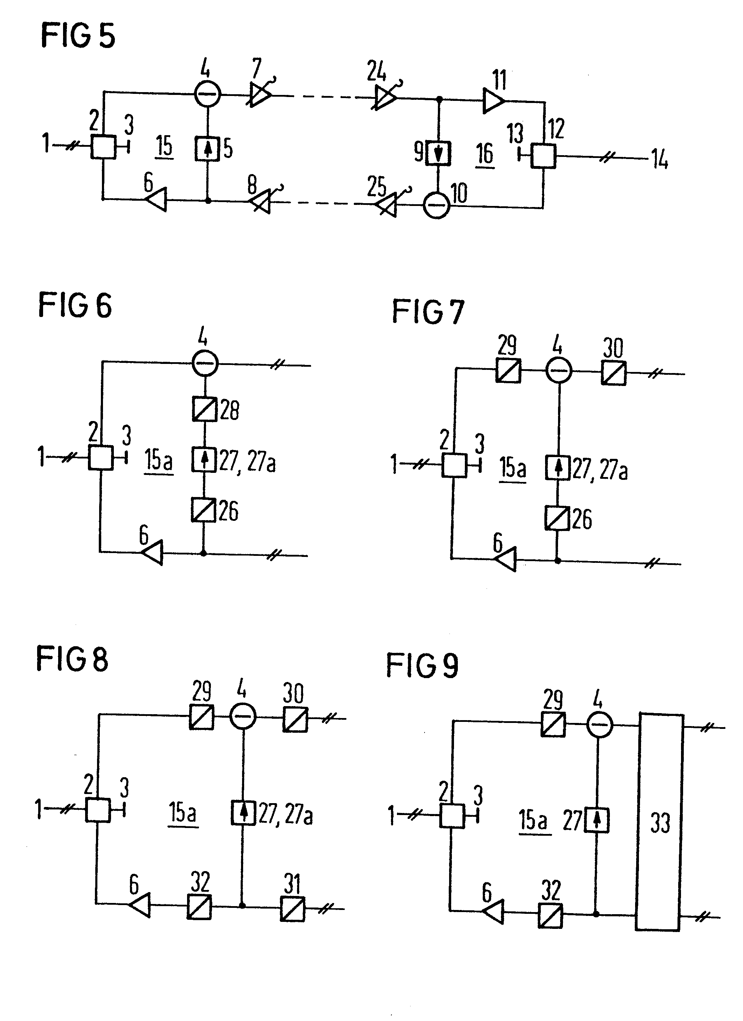

Figur 5 zeigt einen erfindungsgemäßen Vierdrahtkreis mit
Verstärkung. Diese Anordnung unterscheidet sich vom Zweidrahtverstärker nach Figur 1 dadurch, daß nicht nur ein
Leitungsverstärker 7 bzw. 8 vorhanden ist, sondern daß an
deren Stelle Kettenschaltungen aus mehreren Leitungsverstärkern treten. Die zusätzlichen Leitungsverstärker sind
hier durch Leitungsverstärker 24 und 25 angedeutet. Die
Leitungsverstärker können auch die Multiplex-Systeme
sein.

Figur 6 zeigt einen Zweidraht-Vierdrahtübergang 15a, der
sich vom Zweidraht-Vierdrahtübergang 15 dadurch unterscheidet, daß an die Stelle des analogen Transversalfilters ein Analog-Digitalumsetzer 26, ein digitales adaptives Transversalfilter 27 oder ein digitaler Umsetzer 27a
und ein Digital-Analogumsetzer 28 tritt.

Im Zweidraht-Vierdrahtübergang 15a nach Figur 7 ist der
Digital-Analogumsetzer 28 durch einen Analog-Digitalumsetzer 29 und einen Digital-Analogumsetzer 30 ersetzt.

Figur 8 zeigt eine weitere Variante eines Zweidraht-
Vierdrahtüberganges 15a, bei dem der Analog-Digitalübersetzer 26 nach Figur 7 durch einen Analog-Digitalumsetzer
31 und einen Digital-Analogumsetzer 32 ersetzt ist. Diese
Variante hat Bedeutung für das nachfolgende Ausführungsbeispiel.

Figur 9 zeigt einen Zweidraht-Vierdrahtübergang 15a, der sich von dem nach Figur 8 dadurch unterscheidet, daß der Digital-Analogumsetzer 30 und der Analog-Digitalumsetzer 31 entfallen können, weil ein nachfolgendes PCM-System 33 bereits digitale Signale empfangen und aussenden kann. Dieser Zweidraht-Vierdrahtkreis ist dann Teil eines Vierdrahtkreises mit Verstärkung. Der künstliche Rückkopplungspfad kann im Zeitmultiplex die vierundzwanzig oder zweiunddreißig Kanäle des PCM-Systems 33 bedienen.

Bei einer geringen Verstärkung im Vierdrahtkreis reicht ein künstlicher Rückkopplungspfad. Bei größerer Verstärkung muß an jeder der beiden Zweidraht-Vierdrahtübergänge ein künstlicher Rückkopplungspfad eingesetzt werden.

Die Anzahl der Abgriffe beim digitalen Transversalfilter oder die Anzahl der Speicherstellen bei der Memory Compensation hängt stark von der Frequenz ab, bis zu der die Pfeifneigung beseitigt werden muß. Sie ist also deutlich geringer wie bei der Echokompensation.

10 Patentansprüche
9 Figuren

Patentansprüche

1. Zweidrahtverstärker, Zweidraht-Vierdrahtverstärker oder Vierdrahtkreis mit Verstärkung zur Verstärkung analoger Signale mit ein oder zwei symmetrischen Gabeln (2,12) mit Nachbildung (3,13), mit wenigstens einem Verstärker (7, 8, 24, 25) in jedem Vierdrahtweg und mit einem ersten, sich durch die Schaltung ergebenden (natürlichen) Rückkopplungspfad in jedem Zweidraht-Vierdrahtübergang (15, 15a, 16),
d a d u r c h   g e k e n n z e i c h n e t ,
daß zu wenigstens einem Zweidraht-Vierdrahtübergang (15, 15a, 16) ein zweiter, künstlicher Rückkopplungspfad vorgesehen ist, dessen Eingang mit dem Vierdrahtweg einer Übertragungsrichtung und dessen Ausgang mit dem Vierdrahtweg der anderen Übertragungsrichtung verbunden ist.

2. Anordnung nach Anspruch 1,
d a d u r c h   g e k e n n z e i c h n e t ,
daß in der Übertragungsrichtung, an der der Eingang des zweiten Rückkopplungspfades hängt, eine Trennschaltung vorgesehen ist, die die Signale des Vierdrahtweges der anderen Übertragungsrichtung vom Eingang des zweiten Rückkopplungspfades fernhält.

3. Anordnung nach Anspruch 1,
d a d u r c h   g e k e n n z e i c h n e t ,
daß als Trennschaltung ein Trennverstärker (6,11) vorgesehen ist.

4. Anordnung nach Anspruch 2,
d a d u r c h   g e k e n n z e i c h n e t ,
daß als Trennschaltung eine der Ankopplung des zweiten Rückkopplungspfades dienende unsymmetrische Gabel (17, 19) großer Rückwärtsdämpfung vorgesehen ist (Fig. 2).

5. Anordnung nach Anspruch 1,
d a d u r c h   g e k e n n z e i c h n e t ,
daß als zweiter Rückkopplungspfad eine Reihenschaltung
aus einem eingangsseitig angeordneten ersten Analog-
Digitalumsetzer (26), aus einem digitalen adaptiven
Transversalfilter (27), aus einem ersten Digital-Analogumsetzer (28) und aus einer ausgangsseitig in den Vierdrahtweg der anderen Übertragungsrichtung eingeschleiften Subtrahierschaltung (4) vorgesehen ist (Fig. 6).

6. Anordnung nach Anspruch 1,
d a d u r c h   g e k e n n z e i c h n e t ,
daß als zweiter Rückkopplungspfad eine Reihenschaltung
aus einem ersten Analog-Digitalumsetzer (26), aus einem
digitalen adaptiven Transversalfilter (27) und aus einer
ausgangsseitig in den Vierdrahtweg der anderen Übertragungsrichtung eingeschleiften Subtrahierschaltung (4)
vorgesehen ist, der in diesem Vierdrahtweg ein zweiter
Analog-Digitalumsetzer (29) vor- und ein zweiter Digital-Analogumsetzer (30) nachgeschaltet ist (Fig. 7).

7. Anordnung nach Anspruch 1,
d a d u r c h   g e k e n n z e i c h n e t ,
daß als zweiter Rückkopplungspfad im Vierdrahtweg der
einen Übertragungsrichtung ein dritter Analog Digital-
umsetzer (31) und ein dritter Digital-Analogumsetzer
(32) eingeschleift sind, daß ein digitales adaptives
Transversalfilter (27) vorgesehen ist, dessen Eingang
mit dem Verbindungspunkt beider dritter Umsetzer (31,
32) verbunden ist, und daß in dem Vierdrahtweg der anderen Übertragungsrichtung eine Subtrahierschaltung (4)
eingeschleift ist, deren erster Eingang mit dem Ausgang
des digitalen Transversalfilters (27) verbunden ist und
deren zweiter Eingang und deren Ausgang in den Vier-

drahtweg der anderen Übertragungsrichtung eingeschleift sind und der ein zweiter Analog-Digitalumsetzer (29) vor- und ein zweiter Digital-Analogumsetzer (30) nachgeschaltet ist (Fig. 8).

8. Anordnung nach Anspruch 7,
d a d u r c h   g e k e n n z e i c h n e t ,
daß eine genormte Digital-Schnittstelle vorgesehen ist, die zu digitalen Übertragungssystemen (33) führt (Fig. 9).

9. Anordnung nach einem der Ansprüche 5 bis 8,
d a d u r c h   g e k e n n z e i c h n e t ,
daß an die Stelle eines digitalen adaptiven Transversalfilters (27) ein digitaler Umsetzer (27a) tritt.

10. Zweidrahtverstärker mit einem zweiten Rückkopplungspfad an jedem Zweidraht-Vierdrahtübergang nach einem der Ansprüche 5 bis 9,
d a d u r c h   g e k e n n z e i c h n e t ,
daß ein Transversalfilter (21, 27) oder ein digitaler Umsetzer (27a) im Zeitmultiplex in beide zweite Rückkopplungspfade einschaltbar ist.

1/2

FIG 1

FIG 2

FIG 3

FIG 4

2/2

02.07.34

## FIG 5

## FIG 6

## FIG 7

## FIG 8

## FIG 9

Europäisches
Patentamt

**EUROPÄISCHER RECHERCHENBERICHT**

020734ö

Nummer der Anmeldu

EP 86 10 8.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | IBM TECHNICAL DISCLOSURE BULLETIN, Band 20, Nr. 4, September 1977, Seiten 1487-1488, New York, US; R. LENOIR: "High attenuation digital echo suppressor" * Seite 1487, Zeilen 1-17; Seite 1488, letzte Zeile * | 1 | H 04 B 3/36 H 04 B 1/58 |
| A | IDEM | 3,7 | |
| D,X | DE-A-2 753 361 (LICENTIA) * Seite 5, vorletzte Zeile - Seite 6, letzte Zeile * | 1-3 | |
| A | GLOBECOM '82, IEEE GLOBAL TELECOMMUNICATIONS CONFERENCE, CONFERENCE RECORD, 29. November - 2. Dezember 1982, Miami, Band 2, Seiten 921-926, IEEE, New York, US; S. YAMAMOTO et al.: "An experimental model of an echo canceller using an daptive linear predictive algorithm" * Figur 1 * | 1,5 | RECHERCHIERTE SACHGEBIETE (Int Cl 4) H 04 B |
| A | NEC RESEARCH AND DEVELOPMENT, Nr. 49, April 1978, Seiten 58-64, Tokyo, JP; S. TANAKA et al.: "A multichannel echo canceller system" * Figur 3 * | 1,6 | |

Der vorliegende Recherchenbericht wurde für alle Patentansprüche erstellt

| Recherchenort DEN HAAG | Abschlußdatum der Recherche 19-09-1986 | Prüfer HOLPER G.E.E. |
|---|---|---|